# EUROPEAN PATENT APPLICATION

(11) **EP 2 801 299 A1**
(43) Date of publication of application: **12.11.2014**
(21) Application number: 14166512.5
(22) Date of filing: 30.04.2014
(51) Int. Cl.: A47F 3/04, A47F 3/00

(54) **Showcase having zones with different climatic conditions**

(30) Priority: 10.05.2013 IT MI20130768
(71) Applicant: Goppion S.p.A., 20090 Trezzano sul Naviglio (MI) (IT)
(72) Inventor: Goppion, Alessandro, I-20144 Milano (IT)
(74) Representative: Checcacci, Giorgio

(57) **Abstract**

This showcase for preserving and displaying objects in a protected environment comprises a display space and adjustment and control means for maintaining predetermined climatic conditions of the air in the display space. The adjustment and control means comprise an air treatment path outside the display space as well as openings for delivering conditioned air from the treatment path to the display space and openings for returning the conditioned air from the display space to the treatment path. The showcase comprises in the same display space at least two display areas having predetermined different climatic conditions from each other, not separated by any wall.

The presence of display areas with different climatic conditions allows to arrange - in this showcase - several objects, even with the aim of different preservation needs with respect to each other.

## Description

The present invention refers to a showcase for preserving and displaying objects in a protected environment, typically such as artworks, cultural heritage objects or however delicate objects, in museums, exhibitions and the like.

The expression "protected environment" herein and hereinafter refers to an environment in which the atmosphere is controlled, through the monitoring of one or more parameters among temperature, relative humidity, dust content, pollutant content, with the aim of maintaining the conditions provided for preserving the displayed objects, and in which access thereto by unauthorised personnel is prohibited, so as to avoid theft or damage of the displayed objects.

Thus, showcases of this type must meet various types of requirements, in view of the preservation and entirety of the displayed objects. In addition, obviously, these showcases are required to guarantee the best visibility for the displayed objects so as to allow operators managing museums and exhibitions to organise suitable exhibition paths, depending on the cultural message intended to be transmitted. Especially when the objects to be displayed are extremely sensitive, the climatic conditions must be controlled in a very painstaking and accurate manner, so as to avoid damaging the objects. In addition, obviously different objects often require different climatic conditions. Hence, it often occurs that the arrangement of objects in the same museum space is conditioned by requirements related to the correct preservation of the single objects to be displayed and the exhibition needs, which should lead to distributing the objects according to cultural criteria of sequence and matching between various objects. On the contrary, the preservation needs sometimes lead to grouping in the same showcases objects with the same climatic need, even when the logical arrangement for a better access for the public would be different, or to often use showcases for single objects, thus determining an increase of the number of showcases that determines not only high costs but also a fragmentation of the display which may jeopardise the cultural message.

Those managing sensitive museums and exhibition objects, which require predetermined climatic conditions, thus feel the need of having innovative instruments capable of allowing them greater freedom of display of such objects in the display paths, though in the most scrupulous respect of the ideal preservation climatic conditions.

Thus, the present invention regards a showcase according to claim 1. Preferred characteristics are indicated in the dependent claims.

More in detail, the invention regards a showcase for preserving and displaying objects in a protected environment, comprising a display space and adjustment and control means for maintaining predetermined climatic conditions of the air in the display space, wherein the adjustment and control means comprise an air treatment path outside the display space as well as openings for delivering conditioned air from the treatment path to the display space and openings for returning the conditioned air from the display space to the treatment path, characterised in that it comprises in the same display space at least two display areas having predetermined different climatic conditions from each other, not separated by any wall, wherein, for each display area:
- the delivery openings and return openings comprise area-specific delivery and return openings, and
- the area-specific delivery openings of each of the display areas receive - from the treatment path- area-specific conditioned air having climatic conditions suitable for maintaining the predetermined specific climatic conditions for such display area.

The presence of display areas with different climatic conditions allows arranging in this showcase several objects, also with preservation needs different from each other; thus, the display paths may be defined with greater freedom, without requiring an excessive number of showcases.

The different climatic conditions from each other in the different display areas may include different conditions relative humidity and/or different temperature conditions. Vice versa, generally it will not be necessary to provide for different cleaning conditions against dust or pollutant agents, in that objects less sensitive than these factors are definitely not damaged if preserved in cleaner spaces than strictly necessary.

In a preferred embodiment, in each display area:
- the area-specific delivery openings are distributed on a first wall of the showcase facing the display area and
- the area-specific return openings are distributed on a second wall of the showcase facing the display area and opposite to the first wall.

The arrangement on the opposite walls of the area-specific delivery and return openings facilitates the correct distribution of the airflow inside each display area. Preferably, in each display area the area-specific delivery openings and the area-specific return openings are distributed uniformly on the first and respectively on the second wall.

This particularly allows to obtain in each display area a laminar flow of the conditioned air. Laminar flows (contrary to the turbulent flows) are unidirectional flows made up of extremely regular fluid streams that flow parallel from each other and do not mix. The laminar flows of conditioned air in each display area, between the respective area-specific delivery and return openings, wind each object present in the area and thus prevent the air in the different areas from mixing, though in the absence of walls or barriers (even air barriers).

In order to facilitate the obtainment of the aforementioned laminar flows, it is suitable that the emission of conditioned air from the area-specific delivery ports be suitably controlled. Preferably, in each display area, the area-specific conditioned air exits from all area-specific delivery openings at the same speed, and even more preferably the speed of the area-specific conditioned air at the area-specific delivery openings is of 0.30-0.50 m/s. Thus, this allows to easily obtain the desired laminar flow.

In a preferred embodiment, in each display area, the area-specific conditioned air exits from the area-specific delivery openings at a speed proportionally as high as vicinity to other display areas. The higher speed of the air in the so-called border areas between different display areas adjacent with respect to each other allows to create a given barrier effect; such barrier effect is such to increase the already ideal separation from among obtained areas due to laminar flows.

Preferably, the speed of the area-specific conditioned air is in this case of 0.05-0.65 m/s at the area-specific delivery openings. These values revealed to be efficient at obtaining both the desired barrier effect between different display areas and the desired laminar flow inside the single display areas.

In a preferred embodiment, in each display area, the area-specific delivery openings and the area-specific return openings are distributed on the first and respectively on the second wall in proximity of one or more adjacent display areas. This arrangement allows an air barrier which allows to separate the areas from each other, so that they can be maintained in different climatic conditions. The conditioned air introduced into each area does not mix with the conditioned air introduced in other areas, thus guaranteeing to maintain different climatic conditions; actually, there is no convective exchange between different areas and the constant exchange of the conditioned air makes the effect of the possible heat exchange by conduction or radiation marginal.

Preferably, in each display area, the area-specific conditioned air exits from all the area-specific delivery openings at the same speed, and even more preferably, the speed of the area-specific conditioned air at the area-specific delivery openings is of 1.50-3.00 m/s. Thus, this allows to easily obtain the desired air barrier effect. Generally, it is suitable that the speed is proportionally high to the height of the showcase.

Preferably, in each display area, the area-specific return openings are distributed on an area larger than that on which the area-specific delivery openings are distributed. Thus, especially for high showcases, it is easier to recover from the area-specific return openings the air which should be sent to the treatment path, taking into account the general tendency of the delivery air jet to widen towards the inside of the display area.

The number of display areas may be any, for example also equal to or greater than three. Generally, the higher the number of the areas, the greater the versatility of the showcase.

Preferably, the treatment path comprises, for each display area, an area-specific delivery plenum upstream of the area-specific delivery openings and/or an area-specific return plenum downstream of the area-specific return openings. Thus, the expression plenum is herein and hereinafter used to describe a portion in the air passage circuit having a much larger section with respect to the other portions of the circuit, so that - therein - the speed - of the air is substantially zeroed. The presence of a plenum immediately upstream and downstream of the display area facilitates the establishment of the laminar flow conditions.

Further characteristics and advantages of a showcase according to the invention shall be more apparent from the following description of preferred embodiments, provided with reference to the attached drawings. In such drawings:
- Fig 1 is a perspective view of a showcase according to a first embodiment of the invention;
- Fig 2 is a functional scheme of the showcase of Fig 1;
- Fig 3 is a perspective view of a showcase according to a second embodiment of the invention;
- Fig 4 is a functional diagram of the showcase of Fig 3;
- Fig 5 is a perspective view of a showcase according to a third embodiment of the invention;
- Fig 6 is a functional scheme of the showcase of Fig 5.

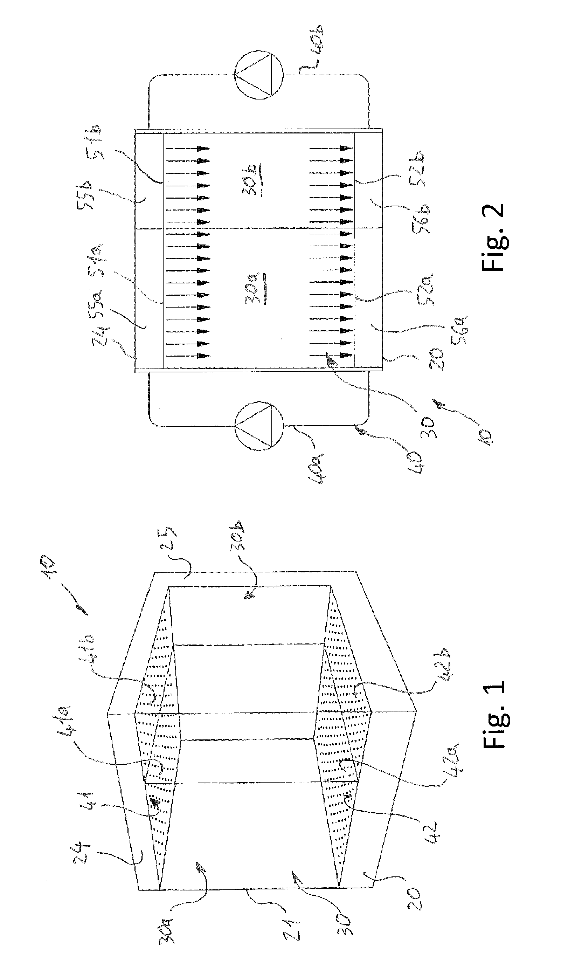

In figures 1 and 2, a showcase according to a first embodiment of the invention with is indicated in its entirety with **10.** The showcase 10 comprises a base **20,** a box **21** above the base 20, a roof **24** above the box 21, and a backrest **25** arranged on the back of the box 21 and adjacent both to the base 20 and to the roof 24. The box 21 is made up of panels including at least one openable, coupled from each other in a sealing fashion in a per se conventional manner; in the figures, neither the openable panels nor the sealing means are shown, in that not part of the invention.

The showcase 10 comprises a display space **30** inside the box 21 and adjustment and control means for maintaining predetermined climatic conditions of the air in the display space. These adjustment and control means comprise an air treatment path **40,** housed in the base 20, in the backrest 25 and in the roof 24, thus outside the display space 30, as well as delivery openings **41** of conditioned air from the treatment path 40 to the display space 30 and return openings **42** of the conditioned air from the display space 30 to the treatment path 40.

The treatment path 40 comprises equipment and devices (per se known) for measuring and modifying the climatic conditions of the air; for example, they may be provided with heaters, coolers, humidifiers, dehumidifiers, filters of various types, all per se known in the art and thus neither described nor illustrated in detail. In the same display space 30 at least two display areas having predetermined different climatic conditions from each other are provided; in particular, in the example of the illustrated showcase 10, two display areas **30a** and **30b** are provided. The two areas 30a and 30b are not separated from each other by any wall, channel or the like; thus, they are solely differentiated by the different climatic conditions therein. These different climatic conditions from each other in the different display areas 30a and 30b comprise different relative humidity and/or different temperature conditions.

The delivery and return openings comprise area-specific delivery **41a, 41b** and return **42a, 42b** openings of the conditioned air. The area-specific delivery openings 41 a, 41 b receive from the treatment path 40 area-specific conditioned air having the predetermined specific climatic conditions for the display area 30a or 30b. For such purpose, also the treatment path 40 is evidently doubled into two treatment paths **40a, 40b,** each specific for the respective display area 30a, 30b. The area-specific delivery openings 41 a, 41 b are distributed uniformly on a first wall **51 a, 51 b** of the showcase 10 facing the display area 30a, 30b and the area-specific return openings 42a, 42b are distributed uniformly on a second wall 52a, **52b** of the showcase 10 facing the display area 30a, 30b and opposite to the first wall 51a, 51b.

In each display area 30a, 30b, between the area-specific delivery openings 41 a, 41 b and the area-specific return openings 42a, 42b a laminar flow of area-specific conditioned air is established, which traverses the entire display area, as schematically represented by the vectors in Fig 2. The area-specific conditioned air exits from all the area-specific delivery openings 41 a, 41 b at the same speed, preferably comprised between 0.30 m/s and 0.50 m/s.

The conditioned air laminar flows in each display area 30a, 30b, between the respective area-specific delivery 41 a, 41 b and return 42a openings, 42b, wind each object present in the area 30a, 30b and thus prevent the air in the different zones from mixing, though in the absence of walls or barriers of any kind.

The area-specific delivery 41 a, 41 b and return 42a, 42b openings may be formed, for example, by a plurality of equal holes.

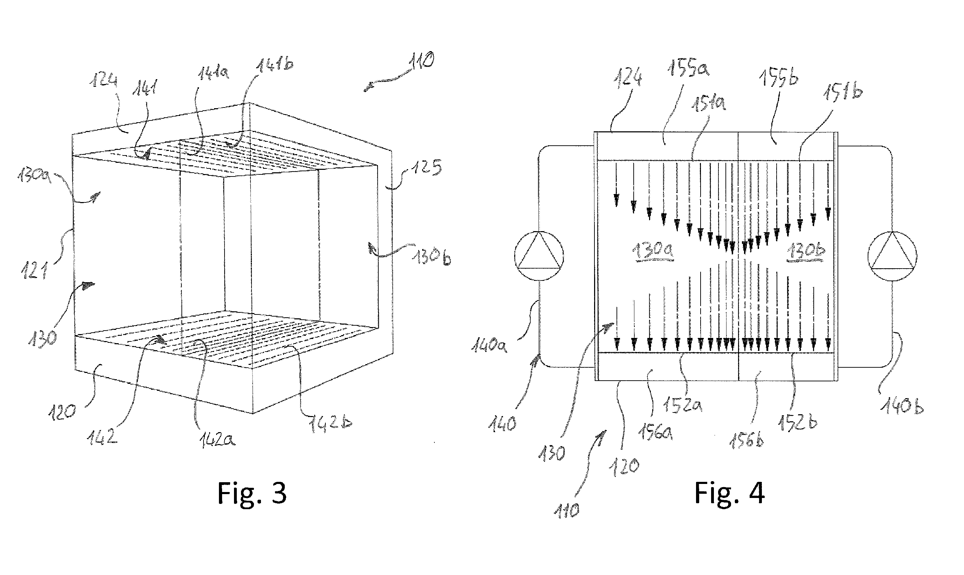

The air treatment path 40 may then comprise, for each display area 30a, 30b, an area-specific delivery plenum **55a, 55b** upstream of the area-specific delivery openings 41 a, 41 b and/or an area-specific return plenum **56a, 56b,** downstream of the area-specific return openings 42a, 42b. The presence of the area-specific plenum allows to make the conditioned air flow much more regular, thus facilitating the establishment of laminar motion conditions in the display areas 30a and 30b. Figures 3 and 4 show a showcase **110** according to a second embodiment of the invention. The showcase 110, analogously to the showcase 10, comprises a base **120,** a box **121** above the base 120, a roof **124** above the box 121, and a backrest **125** arranged at the back of the box 121 and adjacent to both the base 120 and the roof 124. The box 121 is made up of panels including at least one openable, coupled to each other in a sealing fashion in a per se conventional manner; in the figure, neither the openable panels nor the sealing means are shown, in that not part of the invention.

The showcase 110 comprises a display space **130** inside the box 121 and adjustment and control means for maintaining predetermined climatic conditions of the air in the display space. These adjustment and control means comprise a treatment path **140** of the air, housed in the base 120, in the backrest 125 and in the roof 124, thus outside the display space 130, as well as delivery openings **141** of conditioned air from the treatment path 140 to the display space 130 and return openings **142** of the conditioned air from the display space 130 to the treatment path 140.

The treatment path 140 comprises equipment and devices (per se known) for measuring and modifying the climatic conditions of the air; for example, they may be provided with heaters, coolers, humidifiers, dehumidifiers, filters of various types, all per se known in the art and thus neither described nor illustrated in detail. In the same display space 130 at least two display areas having predetermined different climatic conditions from each other are provided; in particular, in the example of the illustrated showcase 110, two display areas **130a** and **130b** are provided. The two areas 130a and 130b are not separated from each other by any wall, channel or the like; thus they are solely differentiated by the presence of different climatic therein. These climatic conditions different from each other in the different display areas 130a and 130b comprise different relative humidity and/or different temperature conditions.

The delivery and return openings comprise area-specific delivery **141a, 141b** and return **142a, 142b** openings of the conditioned air. The area-specific delivery openings 141a, 141b receive from the treatment path 140 area-specific conditioned air having the predetermined specific climatic conditions for the display area 130a or 130b. For such purpose, also the treatment path 140 is evidently doubled into two treatment paths **140a, 140b,** each specific for the respective display area 130a, 130b.

The area-specific delivery openings 141 a, 141 b are distributed uniformly on a first wall **151a, 151 b** of the showcase 110 facing the display area 130a, 130b and the area-specific return openings 142a, 142b are distributed uniformly on a second wall **152a, 152b** of the showcase 110 facing the display area 130a, 130b and opposite to the first wall 151a, 151 b.

In every display area 130a, 130b, between the area-specific delivery openings 141 a, 141 b and the area-specific return openings 142a, 142b a laminar flow of the area-specific conditioned air is established, which traverses the entire display area. Contrary to the showcase 10, the area-specific conditioned air exits from the area-specific delivery openings 141a, 141b with different speed. More precisely, the area-specific conditioned air exits with greater speed in area-specific openings proximal to other display areas, more precisely with speed proportionally as high as is greater is the vicinity to other display areas, as schematically represented by the vectors in Fig 4. The air speed at the exit of the openings 141 a, 141 b is thus preferably comprised between 0.05 m/s and 0.65 m/s.

Like in the showcase 10, the conditioned air laminar flows in each display area 130a, 130b, between the respective area-specific delivery 141 a, 141 b and return 142a, 142b openings, wind every object present in the area 130a, 130b and thus prevent the air in the different areas from mixing, though in presence of walls or barriers of any type.

In addition, the higher speed of air in the so-called border areas between the different display areas 130a, 130b adjacent from each other allows to create a certain barrier effect; this barrier effect is such to increase the already optimal separation from among the obtained area due to the laminar flows.

Like in the showcase 10, the area-specific delivery 141 a, 141b and return 142a, 142b openings may for example be formed by a plurality of equal holes.

The air treatment path 140 may comprise, for each display area 130a, 130b, an area-specific delivery plenum **155a, 155b** upstream of the area-specific delivery openings 141 a, 141b and/or an area-specific return plenum 156a, 156b, downstream of the area-specific return openings 142a, 142b. The presence of the area-specific plenums allows to make the conditioned air flow more regular, thus facilitating the establishment of laminar motion conditions in the display areas 130a and 130b.

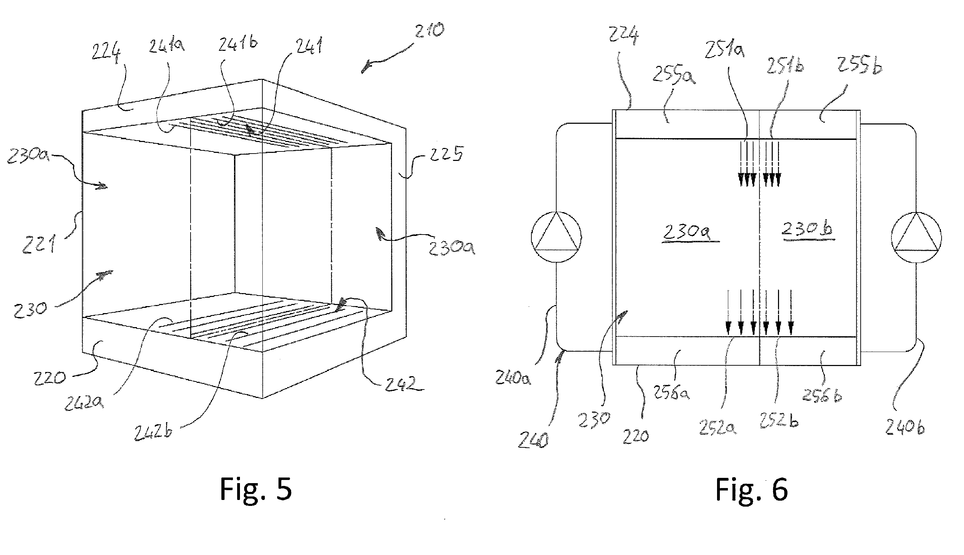

Figure 5 and 6 shows a showcase **210** according to a third embodiment of the invention. The showcase 210, analogously to showcases 10 and 110, comprises a base **220,** a box **221** above the base 220, a roof **224** above the box 221, and a backrest **225** arranged against the back of the box 221 and adjacent both to the base 220 and to the roof 224. The box 221 is made up of panels between which at least one is openable, coupled to each other in a sealing fashion in a per se conventional manner; in the figures, neither the openable panels nor the sealing means are outlined, given that they are not part of the invention.

The showcase 210 comprises a display space **230** inside the box 221 and adjustment and control means for maintaining predetermined climatic conditions of the air in the display space. These adjustment and control means comprise a treatment path **240** of the air, housed in the base 220, in the backrest 225 and in the roof 224, thus outside the display space 230, as well as openings **241** for delivering conditioned air from the treatment path 240 to the display space 230 and openings **242** for returning the conditioned air from the display space 230 to the treatment path 240.

The treatment path 240 comprises equipment and devices (per se known) for measuring and modifying the climatic conditions of the air; for example heaters, coolers, humidifiers, dehumidifiers, filters of various kind may be provided, all per se known in the art and thus neither described nor illustrated in detail.

In the same display space 230 at least two display areas having predetermined different climatic conditions from each other are provided; in particular, in the example of the illustrated showcase 210, two display areas **230a** and **230b** are provided. The two areas 230a and 230b are not separated from each other by any wall, channel or the like; thus, they are solely differentiated by the different climatic conditions to therein. These different climatic conditions from each other in the different display areas 230a and 230b comprise different relative humidity and/or temperature conditions.

The delivery and openings comprise area-specific delivery **241a, 241b** and return **242a, 242b** openings of the conditioned air. The area-specific delivery openings 241 a, 241 b receive from the treatment path 240 area-specific conditioned air having the predetermined specific climatic conditions for the display area 230a or 230b. For such purpose, also the treatment path 240 is evidently doubled into two treatment paths **240a, 240b,** each specific for the respective display area 230a, 230b.

The area-specific delivery openings 241 a are distributed on a first wall **251a** of the showcase 210 facing the display area 230a and in proximity of the display area 230b; the area-specific return openings 242a are distributed on a second wall **252a** of the showcase 210 facing the display area 230a and in proximity of the display area 230b; the second wall 252a is opposite to the first wall 251 a. The area-specific delivery openings 241 b are distributed on a first wall **251 b** of the showcase 210 facing the display area 230b and in proximity of the display area 230a; the area-specific return openings 242b are distributed on a second wall **252b** of the showcase 210 facing the display area 230b and in proximity of the display area 230a; the second wall 252b is opposite to the first wall 251 b.

In every display area 230a, 230b, between the area-specific delivery openings 241 a, 241 b and the area-specific return openings 242a, 242b an area-specific conditioned air flow, which traverses the entire display area, is established. Contrary to showcase 10 and showcase 110, the area-specific conditioned air which exits from the area-specific delivery openings 241 a, 241 b does not have the laminar flow characteristics, but it is concentrated on the border between the adjacent display areas 230a and 230b, forming an air barrier therebetween, as schematically represented by the vectors in Fig 6. The speed of the air at the exit from the openings 241 a, 241 b is thus preferably comprised between 1.5 m/s and 3.0 m/s.

The conditioned air in each display area 230a, 230b not only traverses the space directly comprised between the respective area-specific delivery 241 a, 241 b and return 242a, 242b openings, but it is extended over the entire display area 230a, 230b, thus winding every object present therein. The air barrier formed in proximity of the border between the two display areas 230a and 230b prevents the air in the different areas from mixing, though in the absence of walls or barriers of any kind. Preferably, in each display area 230a, 230b, the area-specific return openings 242a, 242b are distributed on an area larger than that on which the area-specific delivery openings are distributed 241 a, 241 b. Thus, especially if the showcase 210 is relatively high, is easier to recover from the area-specific return openings 242a, 242b the air to be conveyed to the treatment path 240, considering the natural tendency of the delivery air jet to expand towards the inside of the display area 230a, 230b.

Like in showcase 10 and showcase 110, the area-specific delivery 141 a, 141b and return 142a, 142b openings may for example be formed by a plurality of equal holes.

The air treatment path 240 may comprise, for each display area 230a, 230b, an area-specific delivery plenum **255a, 255b** upstream of the area-specific delivery openings 241 a, 241 b and/or an area-specific return plenum **256a, 256b,** downstream of the area-specific return openings 242a, 242b. The presence of the area-specific plenums allows to make the conditioned air flow much more regular, thus, in this case, facilitating the maintenance of a separation between the two adjacent conditioned air flows which form the air barrier between the display areas 230a and 230b.

The illustrated showcases 10, 110, 210 have two display distinct areas; it is obviously possible that the showcases according to the invention have three or more distinct display areas, variously arranged in the showcase.

## Claims

1. Showcase (10; 110; 210) for preserving and displaying objects in a protected environment, comprising a display space (30; 130; 230) and adjustment and control means for maintaining predetermined climate conditions of the air in the display space (30; 130; 230), wherein the adjustment and control means comprise an air treatment path (40; 140; 240) outside the display space (30; 130; 230) as well as delivery openings (41; 141; 241) for delivering conditioned air from the treatment path (40; 140; 240) to the display space (30; 130; 230) and return openings (42; 142; 242) for returning the conditioned air from the display space (30; 130; 230) to the treatment path (40; 140; 240), **characterised by** comprising in the same display space (30; 130; 230) at least two display areas (30a, 30b; 130a, 130b; 230a, 230b) having predetermined climate conditions different from each other, not separated by any wall, wherein, for each display area (30a, 30b; 130a, 130b; 230a, 230b):
- the delivery and return openings comprise area-specific delivery (41 a, 41b; 141 a, 141b; 241 a, 241 b) and return openings (42a, 42b; 142a, 142b; 242a, 242b), and
- the area-specific delivery openings (41 a, 41b; 141 a, 141b; 241 a, 241 b) of each one of the display areas (30a, 30b; 130a, 130b; 230a, 230b) receive, from the treatment path (40; 140; 240), area-specific conditioned air having climate characteristics suitable for keeping the predetermined climate conditions specific for such display area (30a, 30b; 130a, 130b; 230a, 230b).

2. Showcase according to claim 1, wherein the climate conditions different from each other in the different display areas (30a, 30b; 130a, 130b; 230a, 230b) comprise different relative humidity and/or temperature conditions.

3. Showcase according to claim 1, wherein, in each display area (30a, 30b; 130a, 130b; 230a, 230b):
- the area-specific delivery openings are spread on a first wall (51 a, 51b; 151 a, 151b; 251 a, 251 b) of the showcase facing the same display area (30a, 30b; 130a, 130b; 230a, 230b), and
- the area-specific return openings (42a, 42b; 142a, 142b; 242a, 242b) are spread on a second wall (52a, 52b; 152a, 152b; 252a, 252b) of the showcase facing the same display area (30a, 30b; 130a, 130b; 230a, 230b) and opposite to the first wall (51 a, 51b; 151 a, 151b; 251 a, 251 b).

4. Showcase according to claim 3, wherein, in each display area (30a, 30b; 130a, 130b):
- the area-specific delivery openings (41 a, 41b; 141 a, 141b) and the area-specific return openings (42a, 42b; 142a, 142b) are evenly spread on the first (51 a, 51b; 151 a, 151b) and on the second walls (52a, 52b; 152a, 152b), respectively.

5. Showcase according to claim 4, wherein, in each display area (30a, 30b), the area-specific conditioned air exits from all the area-specific delivery openings (41 a, 41 b) at the same speed.

6. Showcase according to claim 5, wherein the speed of the area-specific conditioned air at the area-specific delivery openings (41 a, 41 b) is 0.30-0.50 m/s.

7. Showcase according to claim 5, wherein, in each display area (130a, 130b), the area-specific conditioned air exits from the area-specific delivery openings (141 a, 141 b) at a speed increasing as proximity to the other display areas (130b, 130a) increases.

8. Showcase according to claim 7, wherein, in each display area (130a, 130b), the speed of the area-specific conditioned air at the area-specific delivery openings (141 a, 141 b) is 0.05-0.65 m/s.

9. Showcase according to claim 3, wherein, in each display area (230a, 230b):
- the area-specific delivery openings (241 a, 241 b) and the area-specific return openings (242a, 242b) are spread on the first (251 a, 251 b) and second walls (252a, 252b), respectively, in proximity to one or more adjacent display areas (230b, 230a).

10. Showcase according to claim 9, wherein, in each display area (230a, 230b), the area-specific conditioned air exits from all the area-specific delivery openings (241 a, 241 b) at the same speed.

11. Showcase according to claim 10, wherein the speed of the area-specific conditioned air at the area-specific delivery openings (230a, 230b) is 1.50-3.00 m/s.

12. Showcase according to any one of claims from 9 to 11, wherein, in each display area (230a, 230b), the area-specific return openings (242a, 242b) are spread on an area wider than that on which the area-specific delivery openings (241 a, 241 b) are spread.

13. Showcase according to any one of the previous claims, wherein the number of display areas (30a, 30b; 130a, 130b; 230a, 230b) is equal to or higher than three.

14. Showcase according to any one of the previous claims, wherein the treatment path (40; 140; 240) comprises, for each display area (30a, 30b; 130a, 130b; 230a, 230b), an area-specific delivery plenum (55a, 55b; 155a, 155b; 255a, 255b) upstream of the area-specific delivery openings (41a, 41b; 141a, 141b; 241 a, 241 b) and/or an area-specific return plenum (56a, 56b; 156a, 156b; 256a, 256b) downstream of the area-specific return openings (42a, 42b; 142a, 142b; 242a, 242b).
